# EUROPÄISCHE PATENTSCHRIFT

(11) **EP 1 219 520 B1**
(45) Veröffentlichungstag und Bekanntmachung des Hinweises auf die Patenterteilung: **01.03.2006**
(21) Anmeldenummer: 01130517.4
(22) Anmeldetag: 21.12.2001
(51) Int. Cl.: B60T 17/22

(54) **Vorrichtung und Verfahren zur telemetrischen Übertragung von Messdaten**
Apparatus and method for transmission of measurement data
Appareil et méthode pour le transmission de données de mesure

(30) Priorität: 22.12.2000 DE 10064296
(43) Veröffentlichungstag der Anmeldung: 03.07.2002
(73) Patentinhaber: Hank, Jürgen, Dipl.-Ing. (FH), 86899 Landsberg (DE)
(72) Erfinder: Hank, Jürgen, Dipl.-Ing. (FH), 86899 Landsberg (DE)
(74) Vertreter: Beetz & Partner

(56) Entgegenhaltungen:
- DE-A- 4 225 042
- DE-A- 19 623 546
- DE-A- 19 835 252
- DE-U- 9 311 524
- DE-U- 29 516 505
- US-A- 4 586 370
- US-A- 5 681 015
- US-A- 5 747 685

## Beschreibung

Die Erfindung betrifft eine Vorrichtung und ein Verfahren zur telemetrischen Übertragung von Meßdaten, insbesondere von Bremsdrücken eines Fahrzeugbremssystems, mit einer optimierten Auslastung der Übertragungskanäle.

Die hydraulischen und/oder pneumatischen Bremsanlagen von Kraftfahrzeugen, insbesondere von Nutzfahrzeugen, müssen in regelmäßigen Zeitintervallen sowie nach Reparaturarbeiten auf ihre Funktionsfähigkeit hin überprüft werden. Ein wesentlicher Bestandteil einer derartigen Prüfung sind Bremsdruckmessungen in den verschiedenen Bremsleitungen, die Rückschlüsse auf den Zustand der Bremszylinder, der lastabhängigen Bremssteuerung und der Bremsleitungen erlauben.

Die US-A-5 681 015 zeigt ein Funk-Übertragungssystem für Eisenbahnfahrzeuge. Hierbei werden Repeater-Wagen und normale Wagen eingesetzt, wobei einem Repeater-Wagen jeweils mehrere normale Wagen zugeordnet sind. Auf ein Steuersignal von der Lokomotive hin übermitteln die Repeater-Wagen Statusinformationen der Luftbremsen zur Lokomotive, wobei die Repeater-Wagen die Informationen der normalen Wagen weiterleiten.

Beispielsweise bei Nutzfahrzeugen ist es notwendig, parallel zur Bremsenprüfung auch die dabei entstehenden Betätigungsdrücke zu erfassen. Dieser Steuerluftdruck Pm kann nun direkt an die entsprechenden Achsen verteilt werden. Üblicherweise wird jedoch dieser Steuerdruck Pm weiter über beladungsabhängige Reduzierventile ALB zu den einzelnen Achsen und/oder den einzelnen Bremsen verteilt. Soll nun bei einer Bremsenprüfung der Zustand der Bremse beurteilt werden, ist es wichtig, die entsprechenden Druckverhältnisse zu messen, um die Funktion der beispielsweise pneumatischen Bremsventile beurteilen zu können. Hierzu werden beispielsweise akkubetriebene Funk-Druckaufnehmer verwendet, die Einsteuer- und Zylinderdrücke messen und die gemessenen Werte drahtlos an eine Rechnereinheit übertragen. Derartige Funk-Druckaufnehmer sind beispielsweise in der Druckschrift DE 93 11 524.4 U beschrieben.

Diese Funk-Druckaufnehmer haben jedoch den Nachteil, dass sie aus gesetzgebungstechnischen Gründen nur in einem eng begrenzten Frequenzband senden können. Bei Lastkraftwägen mit Hängern (Zugfahrzeugen) ist es möglich, dass 10 oder mehr Funkkanäle benötigt werden, da pro Achse und/oder pro Bremse ein Funk-Druckaufnehmer verwendet wird. Eine entsprechende Prüfung kann mitunter die Zeitdauer von einer Stunde überschreiten. Zwischenzeitlich kann es erforderlich werden, die Bremsdrücke nicht nur pro Achse, sondern sogar pro Fahrzeugrad zu dokumentieren, wodurch die Anzahl der Funkkanäle nochmals entsprechend erhöht werden würde. Andere Funkdienste, wie z.B. Fahrzeugschließanlagen, Garagentoröffner usw., sind auf die gleiche Frequenz angewiesen, so dass es oftmals zu Blockierungen dieser anderen Funkdienste bei einer Fahrzeugprüfung kommen kann.

Aufgabe der Erfindung ist es, eine Vorrichtung und ein Verfahren zur telemetrischen Übertragung von Messdaten zu schaffen, die eine Auslastung der zur Verfügung stehenden Übertragungskanäle optimiert.

Die Aufgabe kann beispielsweise gemäß den Merkmalen der unabhängigen Patentansprüche gelöst werden. Die abhängigen Patentansprüche zeigen Beispiele von Ausführungsmöglichkeiten der Erfindung auf.

Bei einer Bremsenuntersuchung beträgt erfahrungsgemäß die Zeit, bei der aktiv gebremst wird, nur etwa 20 % der gesamten Bremsenuntersuchungszeit. Infolgedessen kann es sinnvoll sein, die Funk-Druckaufnehmer bzw. die Sensoreinheiten druckgesteuert zu betreiben. Während der Zeit, in der nicht gebremst wird (beispielsweise während Bedienvorgängen, Achswechseln, Pausen usw.) sind die Drucksender dann abgeschaltet. Dies kann beispielsweise dadurch erreicht werden, daß der in eine Sensoreinheit eingebaute Mikrocontroller den anliegenden Druck dauernd überwacht. Wenn sich der Bremsdruck in einer beispielsweise vorwählbaren Zeit nicht ändert (z.B. Differenzdruck 0) wird eine Übertragungseinheit der Sensoreinheit abgeschaltet. Damit nun bei einer plötzlichen Änderung des Bremsdrucks keine Meßdaten verlorengehen, können die Drücke in einer Speichereinheit kontinuierlich abgespeichert werden, wodurch bei einem Aktivieren der Übertragungseinheit die Daten der Änderung erfaßt werden können und dann auch übertragen werden können (zwischen der Aktivierung und dem tatsächlichen Druckanstieg kann eine gewisse Zeit verstreichen). Die vorgenannte Vorgehensweise erlaubt es, die in diesem Zeitintervall angefallenen Drücke zu erfassen und dann zu übertragen.

Erfindungsgemäß kann die Vorrichtung zur drahtlosen Übertragung von Meßdaten, insbesondere von Bremsdrücken eines Fahrzeugbremssystems, die Sensoreinheit, einen Meßaufnehmer, die Speichereinheit für die Meßdaten und die Übertragungseinheit zum Senden der Meßdaten enthalten.

Die Erfindung kann weiterhin eine Auswerteeinheit aufweisen, die die gesendeten Meßdaten empfängt und bei Bedarf auswertet.

Weiterhin kann die Sensoreinheit zur Auslastungsoptimierung des Übertragungswegs nur während einer vorbestimmten Zeitdauer Meßdaten zur Auswerteeinheit senden. Die vorbestimmte Zeitdauer kann fremd- und/oder druckgesteuert gewählt werden.

Dadurch ist es erfindungsgemäß möglich, nur dann zu senden, wenn tatsächlich Daten übertragen werden müssen. Während beispielsweise Bedienvorgängen kann beispielsweise nicht gesendet werden, so daß der Übertragungsweg frei bleibt und keine anderen Funkdienste gestört werden. Insbesondere kann dadurch ein Duty-Cycle von 10 % eingehalten werden, wobei beispielsweise in einer Stunde nur 10 % Auslastung ausreicht.

Ein mögliches Frequenzband für die Übertragung der Meßdaten liegt beispielsweise bei 433,050 bis 434,791 MHz.

Die Meßdaten können in einer Speichereinheit mit einem jeweiligen Zeitstempel eingeschrieben werden. Der Zeitstempel kann hierbei jedem Datensatz zugeordnet werden. Es ist auch möglich, den Zeitstempel nur einem Datensatz zuzuordnen, wobei dann die weiteren abgespeicherten Datensätze beginnend mit dem Anfangszeitstempel zugeordnet werden können, da beispielsweise die Sample-Rate (bzw. Abtastrate) bekannt ist. Eine mögliche Sample-Rate der Bremsdrücke kann bei 10 bis 20 Hz liegen.

Die Sensoreinheit kann die Meßdaten kontinuierlich überprüfen. Bei einer Überschreitung eines Schwellmeßwerts P_{grenz} und/oder bei Überschreitung eines Änderungsgrenzwerts dP/dt kann dann die Übertragungseinheit der Sensoreinheit aktiviert werden und eine Meßwertübertragung zur Auswerteeinheit kann druckgesteuert gestartet werden.

Sobald die Drucküberprüfung ergibt, daß die jeweilige Bremsenprüfung abgeschlossen ist, wird die Übertragung wieder angehalten.

Weiterhin kann die Sensoreinheit Meßdaten beispielsweise kontinuierlich aufnehmen und in der Speichereinheit abspeichem. Nach Beendigung eines Meßvorgangs und/oder beim Erreichen der Speicherkapazität der Speichereinheit kann dann die Datenübertragung zur Auswerteeinheit ereignisgesteuert bzw. fremdgesteuert gestartet werden. Sobald die jeweilige Messung beendet ist, wird die Datenübertragung bzw. die Meßwerteübertragung wieder ängehalten.

Hierbei kann die Ereignissteuerung sowohl für den Beginn als auch für das Ende der Meßwertübertragung verwendet werden.

Vorteilhaft kann insbesondere sein, daß vor der Meßwertübertragung die Meßwertdaten komprimiert werden. Dadurch kann die Übertragungszeit weiter minimiert werden. Die Meßwertdaten, die zur Auswerteeinheit übertragen werden, enthalten natürlich auch die jeweiligen Zeitinformationen.

Weiterhin kann die Sensoreinheit die Meßwerte in der Speichereinheit kontinuierlich oder druckgesteuert speichern und dann beispielsweise in einem Zeitschlitz synchronisiert durch einen Sendebefehl beispielsweise der Auswerteeinheit ereignisgesteuert zur Auswerteeinheit senden.

In diesem Fall ist die Übertragungseinheit der Sensoreinheit als Transceiver ausgebildet und kann den Sendebefehl von der Auswerteeinheit oder einem anderen Sender empfangen.

Weiterhin ist ein Verfahren zur drahtlosen Übertragung von Meßdaten vorgesehen, das die Meßdaten durch eine Sensoreinheit aufnimmt und diese Meßdaten dann ereignis- und/oder druckgesteuert zu einer Auswerteeinheit sendet.

Erfindungsgemäß kann somit die Auslastung der jeweiligen Übertragungskanäle optimiert werden, da die Sendezeit minimiert wird. Dadurch kann insbesondere der Duty-Cycle in dem verwendeten Frequenzband beispielsweise während einer Bremsenprüfung stark minimiert werden, wobei beispielsweise pro Stunde eine Verminderung auf unter 10 % möglich ist.

Im folgenden werden Ausführungsbeispiele der Erfindung anhand von schematischen Figuren näher erläutert. Es zeigen:
- Fig. 1: eine schematische Darstellung einer an einem Bremssystem eines Fahrzeugs angeordneten Sensoreinheit;
- Fig. 2: eine erfindungsgemäße Sensoreinheit;
- Fig. 3: einen Flußlaufplan einer erfindungsgemäßen Abarbeitung;
- Fig. 4: einen Flußlaufplan einer weiteren erfindungsgemäßen Abarbeitung und
- Fig. 5: einen Flußlaufplan einer weiteren erfindungsgemäßen Abarbeitung.

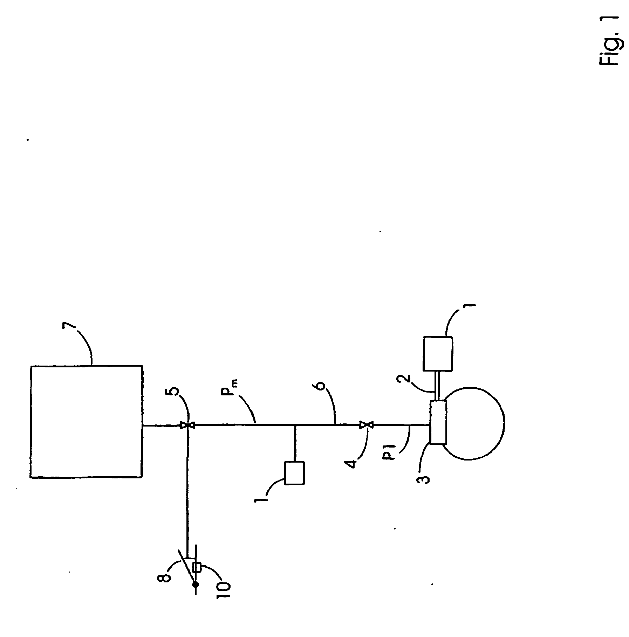

In Fig. 1 ist eine Sensoreinheit 1 dargestellt, die über einen Prüfanschluß 2 mit einer Fahrzeugbremse 3 verbunden ist. Die Fahrzeugbremse ist mit einem beladungsabhängigen Reduzierventil ALB 4 versehen, welches den Steuerbremsdruck Pm reduzieren kann, so daß das ALB 4 den an der Fahrzeugbremse 3 anliegenden Bremsdruck nochmals korrigieren kann.

Zwischen einem Hauptsteuerventil 5 und dem ALB 4 ist eine Bremsleitung 6 vorgesehen, die den Bremsdruck vom Hauptsteuerventil 5 zum ALB 4 weiterleitet. Ein Druckspeicher 7 ist an das Hauptsteuerventil 5 angeschlossen, wobei das Hauptsteuerventil 5 durch ein Bremspedal 8 betätigt werden kann.

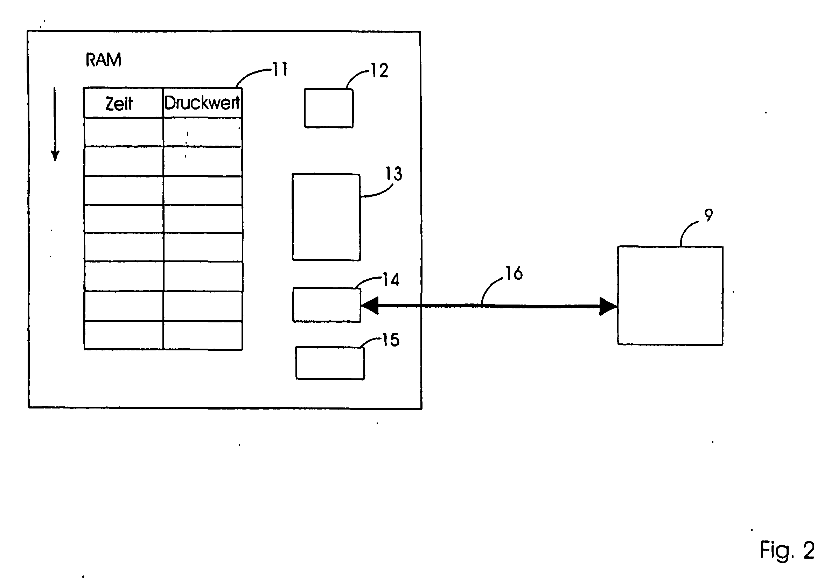

In der Bremsleitung 6 kann eine weitere Sensoreinheit 1 vorgesehen sein, die den Steuerbremsdruck Pm erfaßt und dann druckgesteuert eine Bremsdruckübertragung zu einer Auswerteeinheit 9 (in Fig. 2 dargestellt) startet. Es ist auch möglich, daß in der Bremsleitung 6 keine Sensoreinheit 1 vorgesehen ist und nur an dem Prüfanschluß 2 der Fahrzeugbremse 3 die Sensoreinheit 1 vorgesehen ist, die dann ebenfalls druckgesteuert und/oder ereignisgesteuert die Bremsdruckdaten aufnimmt und sendet.

Eine Ereignissteuerung kann beispielsweise auch dadurch erfolgen, daß das Bremspedal mit einer entsprechenden Kraftmessdose 10 versehen wird und dessen Signal dann dazu verwendet wird, die Bremsdruckdatenübertragung zu aktivieren und/oder die Einspeicherung in eine Speichereinheit 11 (in Fig. 2 dargestellt) der Sensoreinheit 1 zu starten.

Die Fig. 2 zeigt ein Beispiel einer Sensoreinheit 1 mit der Speichereinheit 11, die beispielsweise ein RAM sein kann. Die Sensoreinheit 1 kann weiterhin einen Timer 12, einen Mikrocomputer 13, die Übertragungseinheit 14 und einen Druckaufnehmer 15 aufweisen. Der Druckaufnehmer 15 wird über den Prüfanschluß 2 mit Druck versorgt und gibt entsprechend dem anliegenden Druck ein entsprechendes Signal an den Mikrocomputer 13 weiter. Natürlich kann zwischen dem Druckaufnehmer 15 und dem Mikrocomputer 13 beispielsweise ein nicht dargestellter Analog-/Digital-Wandler vorgesehen sein. Der Timer 12 kann Absolut- und/oder Relativzeitinformationen abgeben, die dann in der Speichereinheit 11 mit den jeweilig anliegenden Druckdaten verknüpft werden können. Die Speichereinheit 11 kann bei einer aktivierten Meßdatenerfassung die hereinkommenden und abgetasteten Meßdaten nacheinander ablegen, wobei entweder zu jedem Datensatz eine Zeit aus dem Timer 12 ausgelesen wird oder beispielsweise nur zu einem Zeitpunkt eine Zeit mit einem Druckdatensatz verknüpft wird, wobei dann die weiteren Druckdatensätze keine direkt zugeordnete Zeitinformation mehr aufweisen. Die Zuordnung der einzelnen Druckdatensätze zu jeweiligen Ereigniszeiten kann dann dadurch erfolgen, daß jeweils über die bekannte Abtastzeit ein jeweiliges Zeitinkrement zu dem jeweiligen Druckdatensatz hinzugezählt werden kann. Dies kann in der Auswerteeinheit 9 erfolgen, so daß die zu übertragende Datenmenge von der Sensoreinheit 1 zu der Auswerteeinheit 9 dadurch weiter reduziert werden kann, da die zu übertragende Menge an Zeitdaten ebenfalls verringert werden kann.

Die Speichereinheit 11 kann beispielsweise ein FIFO(First-In-First-Out)-Speicher bzw. ein Pufferspeicher sein, wobei kontinuierlich die Druckdaten in die Speichereinheit 11 eingeschrieben werden. Je nach Speicherkapazität der Speichereinheit 11 kann somit ein entsprechendes Druckzeitfenster abgedeckt werden. Wenn nun beispielsweise eine druckgesteuerte Aktivierung der Übertragungseinheit 14 der Sensoreinheit 1 durch den Mikrocomputer 13 gestartet wird, so werden die im Speicher vorliegenden Druckdaten und alle folgenden Druckdaten durch die Übertragungseinheit 14 zur Auswerteeinheit 9 über einen Übertragungsweg 16 übertragen. Aufgrund der Speicherkapazität der Speichereinheit 11 gehen somit keine Daten verloren, wobei insbesondere die Daten nicht verlorengehen, die während der Zeitdauer eingegangen sind, die zwischen dem tatsächlichen Druckanstieg und der Aktivierung durch den Mikrocomputer 13 verstrichen ist.

Beispielsweise bei Vorliegen eines Aktivierungssignals, das beispielsweise druckgesteuert von dem Mikrocomputer 13 ausgegeben wird, kann der Timer mit einer Absolutzeit und/oder einer Relativzeit abgefragt werden, wobei dann diese Zeit in die Speichereinheit 11 eingeschrieben werden würde. Um nun keine Druckdaten zu verlieren, würde nun eine entsprechende Zeitdauer über die Abtastrate zurückgerechnet werden. Dies kann durch die Auswerteeinheit 9 geschehen.

Die Messung und/oder die Messwertübertragung kann auch vom Prüfer über eine Tastatur des Prüfstands oder über eine Fernbedienung aktiviert werden. Die Signale der Fernbedienung können beispielsweise von der Übertragungseinheit 14 empfangen werden, wodurch dann, ausgelöst durch den Mikrocomputer 13, die Messung und/oder die Messwertübertragung gestartet werden kann.

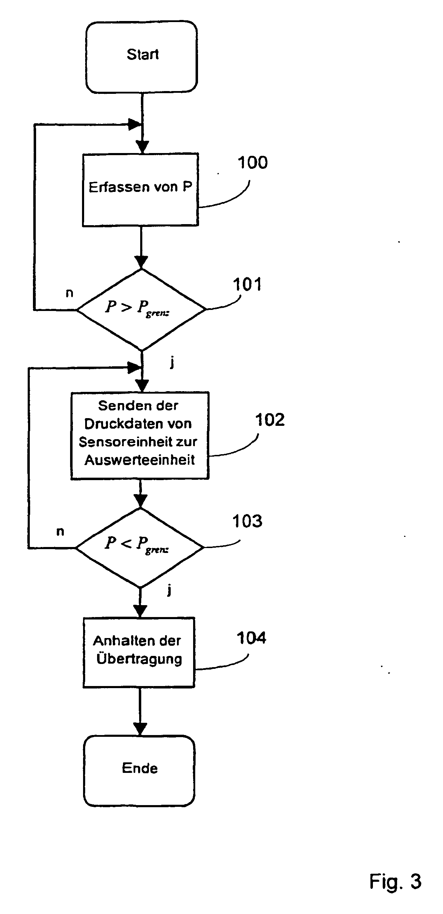

Die Fig. 3 zeigt in einem Schritt 100 eine Erfassung des Bremsdrucks P. In einem Schritt 101 wird dieser Druck P mit einem Grenzwert P_{grenz} verglichen. Ist der Druck P, der den aktuellen Bremsdruck der Bremsleitung 6 und/oder den Bremsdruck an dem Prüfanschluß 2, eventuell reduziert durch das ALB 4, darstellt, größer als der Grenz-Bremsdruck P_{grenz}, so wird in dem Schritt 101 zu einem Schritt 102 verzweigt, in dem die Druckdaten von der Sensoreinheit 1 zur Auswerteeinheit 9 gesendet werden. Der Mikrocomputer 13 könnte hierbei zunächst ein Aktivierungssignal generieren, aufgrund dessen dann die Druckdaten von der Übertragungseinheit 14 gesendet werden. Ist der aktuelle Bremsdruck P kleiner als der Grenzbremsdruck P_{grenz}, so wird zurück vor den Schritt 100 verzweigt. In einem Schritt 103 wird überprüft, ob der aktuelle Bremsdruck P kleiner als der Grenz-Bremsdruck P_{grenz} ist. Ist dies der Fall, so wird die Übertragung in einem Schritt 104 angehalten. Ist dies nicht der Fall, so wird zwischen die Schritte 101 und 102 zurückverzweigt.

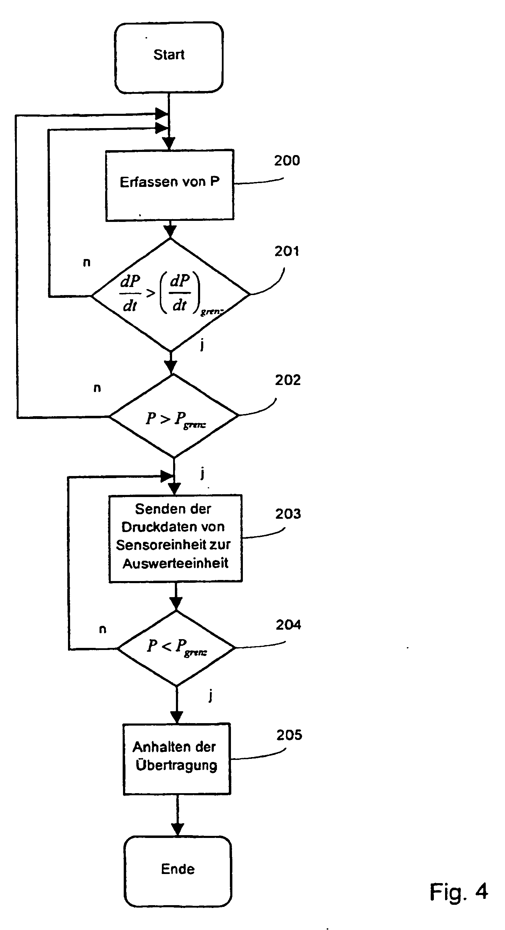

In der Fig. 4 wird zusätzlich zu den Schritten 200, 202, 203, 204 und 205, die identisch mit den Schritten gemäß Fig. 3 sind, noch in einem Schritt 201 abgefragt, ob die Bremsdruckänderung größer ist als ein Änderungsgrenzwert (dP/dt)_{grenz}. Ist dies der Fall, so wird zum Schritt 202 verzweigt. Ist dies nicht der Fall, so wird zurück vor den Schritt 200 verzweigt. Durch ein Abfragen des Änderungsverhaltens des Bremsdrucks kann eventuell noch schneller auf den Beginn einer Bremsenprüfung reagiert werden. Natürlich könnte zusätzlich auch noch die zweite zeitliche Ableitung d²P/dt² des Bremsdrucks verwendet werden.

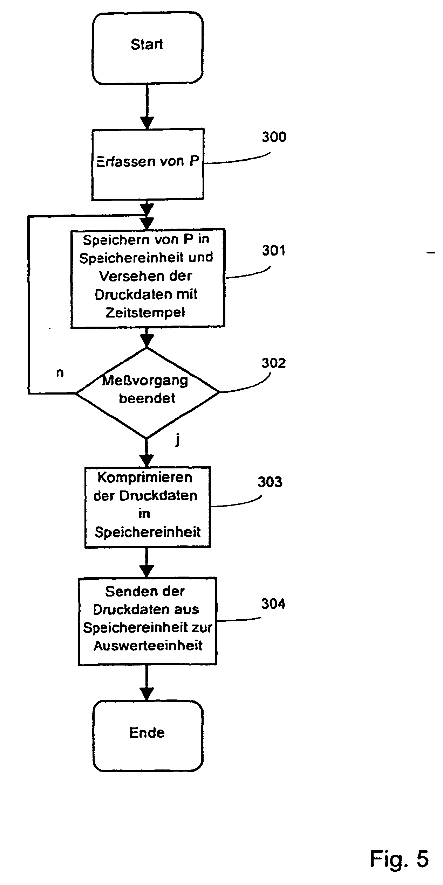

In der Fig. 5 wird in einem Schritt 300 der Bremsdruck P erfaßt. In einem Schritt 301 wird der Bremsdruck P in der Speichereinheit 11 gespeichert und die Druckdaten werden mit einem Zeitstempel versehen. In einem Schritt 302 wird dann beurteilt, ob der Meßvorgang beendet ist. Ist dies nicht der Fall, so wird zurück zwischen die Schritte 300 und 301 verzweigt. Ist der Meßvorgang beendet, so wird zum Schritt 303 verzweigt, bei dem die in der Speichereinheit 11 vorhandenen Druckdaten komprimiert werden. Die komprimierten Druckdaten werden dann in einem Schritt 304 von der Übertragungseinheit 14 zur Auswerteeinheit 9 übertragen.

Erfindungsgemäß können die Drucksensoren somit immer in Betrieb bleiben, wobei jedoch eine teilweise Nutzung des Frequenzbands dadurch erreicht wird, daß die anfallenden Druckdaten sensorintern gesammelt und dann als Paket beispielsweise in komprimierter Form übertragen werden können. Der entsprechende Kanal wird hier nur maximal bis zu 10 % belegt, was es wiederum anderen Funkdiensten ermöglicht, ihre entsprechenden Funktionen auszuführen. Die einzelnen Funksensoren bzw. Sensoreinheiten 1 arbeiten dabei auf unterschiedlichen Frequenzen und können durch eine oder auch mehrere Empfänger empfangen bzw. abgescannt werden. Die Empfänger sind beispielsweise in der Auswerteeinheit 9 enthalten.

Weiterhin kann, wie vorstehend genannt, die Sensoreinheit 1 auch mit einer Übertragungseinheit 14 ausgestattet werden, die als Transmitter ausgebildet ist. Dadurch kann nur jeweils die Sensoreinheit 1, beispielsweise durch den Prüfstand, eingeschaltet werden, die zur momentanen Prüfung benutzt wird. So sind z.B. bei einer Bremsenprüfung an einer ersten Achse eines Fahrzeugs nur der Bremssteuerdruck Pm und ein Einsteuerdruck P1 beispielsweise an der ersten Achse von Interesse (vgl. Fig. 1). Die anderen Sensoren, beispielsweise an anderen Achsen bzw. Bremsen eines Lastkraftwagens, werden bei dieser Ausgestaltung nicht aktiviert, wodurch die entsprechenden Kanäle für andere Funkdienste wiederum frei bleiben.

Es kann weiterhin möglich sein, daß die Auswerteeinheit 9 über einen Transmitter mehrere Kanäle auf der gleichen oder auf unterschiedlichen Frequenzen abscannt. Dadurch kann eine Vielzahl von Sensoreinheiten erfaßt werden.

An dieser Stelle sei angemerkt, daß die Sensoreinheit 1 an jeder Fahrzeugachse und/oder an jeder Fahrzeugbremse 3 angeordnet werden kann.

Die vorstehend genannten Ausführungsformen können in beliebiger Weise miteinander kombiniert werden. Dies gilt auch für Einzelmerkmale der einzelnen Ausführungsformen.

## Patentansprüche

1. Vorrichtung zur drahtlosen Übertragung von Messdaten von Bremsdrücken eines Fahrzeugbremssystems, mit
- einer Sensoreinheit (1), die einen Messaufnehmer (15), eine Speichereinheit (11) für Messdaten und eine Übertragungseinheit (14) zum Senden von Messdaten enthält und
- einer Auswerteeinheit (9), die die gesendeten Messdaten empfängt,
**dadurch gekennzeichnet, dass**
der Messaufnehmer (15) kontinuierlich Messdaten erfasst und diese in der Speichereinheit (11) gespeichert werden, und dass die Sensoreinheit (1) die gespeicherten Messdaten auswertet und basierend auf dem Ergebnis der Auswertung zur Auslastungsoptimierung des Übertragungswegs (16) ereignis- und/oder druckgesteuert nur während einer vorbestimmten Zeitdauer Messdaten zur Auswerteeinheit (9) sendet.

2. Vorrichtung nach Anspruch 1, **dadurch gekennzeichnet, dass** die Messdaten über Funk übertragen werden.

3. Vorrichtung nach Anspruch 1 oder 2, **dadurch gekennzeichnet, dass** die Sensoreinheit (1) die gespeicherten Messdaten in die Speichereinheit (11) mit einem jeweiligen Zeitstempel einschreibt.

4. Vorrichtung nach zumindest einem der Ansprüche 1 bis 3, **dadurch gekennzeichnet, dass** die Sensoreinheit (1) bei Überschreitung eines Schwellmesswerts P_{grenz} und/oder bei Überschreitung eines Änderungsgrenzwerts dP/dt die Übertragungseinheit (14) aktiviert und eine Messwertübertragung zur Auswerteeinheit (9) druckgesteuert startet.

5. Vorrichtung nach zumindest einem der Ansprüche 1 bis 4, **dadurch gekennzeichnet, dass** die Sensoreinheit (1) die Messdaten aufnimmt und in der Speichereinheit (11) sammelt und nach Beendigung eines Messvorgangs und/oder beim Erreichen der Speicherkapazität der Speichereinheit (11) die Messwertübertragung zur Auswerteeinheit (9) ereignisgesteuert startet.

6. Vorrichtung nach zumindest einem der Ansprüche 1 bis 5, **dadurch gekennzeichnet, dass** die Messwertübertragung komprimiert erfolgt.

7. Vorrichtung nach zumindest einem der Ansprüche 1 bis 6, **dadurch gekennzeichnet, dass** die Sensoreinheit (1) die Messwerte in der Speichereinheit (11) speichert und in einem Zeitschlitz synchronisiert durch einen Sendebefehl zur Auswerteeinheit (9) ereignisgesteuert sendet.

8. Vorrichtung nach zumindest einem der Ansprüche 1 bis 7, **dadurch gekennzeichnet, dass** der Sendebefehl von der Auswerteeinheit (9) gesendet und von der Übertragungseinheit (14) der Sensoreinheit (1) empfangen wird.

9. Vorrichtung nach zumindest einem der Ansprüche 1 bis 8, **dadurch gekennzeichnet, dass** die Sensoreinheit (1) an einen Prüfanschluss (2) eines zu prüfenden Kraftfahrzeugs angeschlossen ist und die bei einer Bremsenprüfung auftretenden Bremsdrücke erfasst.

10. Verfahren zur drahtlosen Übertragung von Messdaten, insbesondere von Bremsdrücken eines Fahrzeugbremssystems, mit den Schritten:
- Aufnehmen von Messdaten durch eine Sensoreinheit (1), die einen Messaufnehmer (15), eine Speichereinheit (11) für Messdaten und eine Übertragungseinheit (14) zum Senden von Messdaten enthält
und
- Empfangen der gesendeten Messdaten durch eine Auswerteeinheit (9),
**dadurch gekennzeichnet, dass**
der Messaufnehmer (15) kontinuierlich Messdaten erfasst und diese in der Speichereinheit (11) gespeichert werden, und dass die Sensoreinheit (1) die gespeicherten Messdaten auswertet und basierend auf dem Ergebnis der Auswertung zur Auslastungsoptimierung des Übertragungswegs ereignis- und/oder druckgesteuert nur während einer vorbestimmten Zeitdauer Messdaten zur Auswerteeinheit (9) sendet.

11. Verfahren nach Anspruch 10, **dadurch gekennzeichnet, dass** die Messdaten über Funk übertragen werden.

12. Verfahren nach Anspruch 10 oder 11, **dadurch gekennzeichnet, dass** die Sensoreinheit (1) die gespeicherten Messdaten in die Speichereinheit (11) mit einem jeweiligen Zeitstempel einschreibt.

13. Verfahren nach zumindest einem der Ansprüche 10 bis 12, **dadurch gekennzeichnet, dass** die Sensoreinheit (1) bei einer Überschreitung eines Schwellmesswerts P_{grenz} und/oder bei Überschreitung eines Änderungsgrenzwerts dP/dt die Übertragungseinheit aktiviert und eine Messwertübertragung zur Auswerteeinheit (9) startet.

14. Verfahren nach zumindest einem der Ansprüche 10 bis 13, **dadurch gekennzeichnet, dass** die Sensoreinheit (1) die Messdaten aufnimmt und in der Speichereinheit (11) sammelt und nach Beendigung eines Messvorgangs und/oder beim Erreichen der Speicherkapazität der Speichereinheit (11) die Datenübertragung zur Auswerteeinheit (9) ereignisgesteuert startet.

15. Verfahren nach zumindest einem der Ansprüche 10 bis 14, **dadurch gekennzeichnet, dass** die Datenübertragung komprimiert erfolgt.

16. Verfahren nach zumindest einem der Ansprüche 10 bis 15, **dadurch gekennzeichnet, dass** die Sensoreinheit (1) die Messwerte in der Speichereinheit (11) speichert und in einem Zeitschlitz synchronisiert durch einen Sendebefehl zur Auswerteeinheit (9) ereignisgesteuert gesendet werden.

17. Verfahren nach zumindest einem der Ansprüche 10 bis 16, **dadurch gekennzeichnet, dass** der Sendebefehl von der Auswerteeinheit (9) gesendet und von der Übertragungseinheit der Sensoreinheit (1) empfangen wird.

## Claims

1. Device for wireless transmission of measurement data from a vehicle braking system, having
- A sensor unit (1), which contains a measurement sensing element (15), a memory unit (11) for measurement data and a transmission unit (14) for sending the data and
- An evaluation unit (9), which receives the transmitted measurement data,
**characterised** wherein the measurement sensing element (15) acquires the data continuously and this (data) is saved in the memory unit (11), and wherein the sensor unit (1) evaluates the saved measurement data and sends the measurement data event controlled and or pressure controlled to the evaluation unit (9) only during a predetermined period of time, being based upon the results of the evaluation of the utilisation optimisation of the transmission path (16),

2. Device according to claim 1, **characterised** wherein the measurement data is transmitted via radio.

3. Device according to claims 1 or 2, **characterised** wherein the sensor unit (1) writes the saved measurement data to the memory unit (11) with a current time "stamp".

4. Device according to at least one of the claims 1 to 3, **characterised** wherein the sensor unit (1) activates the transmission unit and starts a pressure controlled measurement value transmission to the evaluation unit (9) when overshooting a threshold value P_{grenz} and / or when overshooting a change limiting value dP/dt.

5. Device according to at least one of the claims 1 to 4, **characterised** wherein the sensor unit (1) acquires the measurement data and collects (it) in the memory unit (11) and after completing the measurement process and / or when reaching the memory unit capacity (11) starts the events controlled measurement value transmission to the evaluation unit (9).

6. Device according to at least one of the claims 1 to 5, **characterised** wherein the measurement value transmission is effected in compressed mode.

7. Device according to at least one of the claims 1 to 6, **characterised** wherein the sensor unit (1) saves the measurement values in the memory unit (11) and sends (them) to the evaluation unit (9) in a time slot synchronised by a send command.

8. Device according to at least one of the claims 1 to 7, **characterised** wherein the send command is sent from the evaluation unit (9) and is received by the transmission unit (14) in the sensor unit (1).

9. Device according to at least one of the claims 1 to 8, **characterised** wherein the sensor unit (1) is connected to a test connector (2) of a vehicle to be tested and captures the braking pressures appearing during a braking test.

10. Process for wireless transmission of measurement data, in particular in braking pressures in a vehicle system, having the steps:
- Acquisition of measurement data by a sensor unit (1), which contains a measurement sensing element (15), a memory unit (11) for measurement data and a transmission unit (14) for sending the measurement data and
- Reception of the transmitted measurement data by an evaluation unit (9),
Characterised wherein the measurement sensing element (15) captures measurement data continuously and this (data) is saved in the memory unit (11), and wherein the sensor unit (1) evaluates the saved measurement data and sends the measurement data to the evaluation unit (9) based upon the results of the evaluation of the utilisation optimisation of the transmission path, event controlled and or pressure controlled, only during a predetermined period of time.

11. Process according to claim 10, **characterised** wherein the measurement data is transmitted via radio.

12. Process according to claims 10 or 11, **characterised** wherein the sensor unit (1) writes the saved measurement data in the memory unit (11) along with a current time "stamp".

13. Process according to at least one of claims 10 to 12, wherein the sensor unit (1) activates the transmission unit and starts a measurement value transmission to the evaluation unit (9), when a threshold value P_{grenz} is exceeded and / or when a change limiting value dP/dt is exceeded.

14. Process according to at least one of claims 10 to 13 **characterised** wherein the sensor unit (1) acquires the measurement data and collects (it) in the memory unit (11) and after completing the measurement process and / or when reaching the memory unit capacity (11) starts the events controlled data transmission to the evaluation unit (9).

15. Process according to at least one of claims 10 to 14 **characterised** wherein the data transmission is effected in compressed mode.

16. Process according to at least one of claims 10 to 15 **characterised** wherein the sensor unit (1) saves the measurement values in the memory unit (11) and sends (them) under events control to the evaluation unit (9) in a time slot synchronised by a send command.

17. Process according to at least one of claims 10 to 16 **characterised** wherein the send command is sent from the evaluation unit (9) and is received by the transmission unit in the sensor unit (1).

## Revendications

1. Dispositif pour la transmission sans fil de données de mesure de pressions de freinage d'un système de freinage d'un véhicule, avec
- une unité de senseur (1) comprenant un capteur de mesure (15), une unité de mémoire (11) pour des données de mesure et une unité de transmission (14) pour l'envoi de données de mesure
et
- une unité d'évaluation (9) recevant les données de mesure envoyées,
**caractérisé en ce que**
le capteur de mesure (15) saisit les données de mesure en continu, celles-ci étant mémorisées dans l'unité de mémoire (11), et **en ce que** l'unité de senseur (1) évalue les données de mesure mémorisées et n'envoie des données de mesure à l'unité d'évaluation (9) sur la base du résultat de l'évaluation que pendant une durée prédéfinie en fonction de l'événement et/ou de la pression, pour l'optimisation d'utilisation de la voie de transmission (16).

2. Dispositif selon la revendication 1, **caractérisé en ce que** les données de mesure sont transmises par voie radioélectrique.

3. Dispositif selon la revendication 1 ou 2, **caractérisé en ce que** l'unité de senseur (1) écrit les données de mesure mémorisées dans l'unité de mémoire (11) avec une estampille correspondante.

4. Dispositif selon l'une des revendications 1 à 3 au moins, **caractérisé en ce que** l'unité de senseur (1) active l'unité de transmission (14) en cas de dépassement d'une valeur de mesure seuil Pₗᵢₘᵢₜₑ et/ou de dépassement d'une valeur limite de variation dP/dt, et démarre une transmission de valeurs de mesure à l'unité d'évaluation (9) en fonction de la pression.

5. Dispositif selon l'une des revendications 1 à 4 au moins, **caractérisé en ce que** l'unité de senseur (1) capte les données de mesure et les recueille dans l'unité de mémoire (11), et démarre la transmission de valeurs de mesure à l'unité d'évaluation (9) en fonction de l'événement à l'issue d'un processus de mesure et/ou si la capacité de mémoire de l'unité de mémoire (11) est saturée.

6. Dispositif selon l'une des revendications 1 à 5 au moins, **caractérisé en ce que** la transmission de valeurs de mesure est effectuée par compression.

7. Dispositif selon l'une des revendications 1 à 6 au moins, **caractérisé en ce que** l'unité de senseur (1) mémorise les valeurs de mesure dans l'unité de mémoire (11) et les envoie dans une fente temporelle, synchronisées par une instruction d'envoi, à l'unité d'évaluation (9) en fonction de l'événement.

8. Dispositif selon l'une des revendications 1 à 7 au moins, **caractérisé en ce que** l'instruction d'envoi est envoyée par l'unité d'évaluation (9) et reçue par l'unité de transmission (14) de l'unité de senseur (1).

9. Dispositif selon l'une des revendications 1 à 8 au moins, **caractérisé en ce que** l'unité de senseur (1) est reliée à une valve de contrôle (2) d'un véhicule automobile à contrôler et saisit les pressions de freinage apparaissant lors d'un essai de freinage.

10. Procédé pour la transmission sans fil de données de mesure, notamment de pressions de freinage d'un système de freinage d'un véhicule, avec les étapes:
- saisie de données de mesure par une unité de senseur (1) comprenant un capteur de mesure (15), une unité de mémoire (11) pour des données de mesure et une unité de transmission (14) pour l'envoi de données de mesure
et
- réception des données de mesure envoyées par une unité d'évaluation (9),
**caractérisé en ce que**
le capteur de mesure (15) saisit les données de mesure en continu, celles-ci étant mémorisées dans l'unité de mémoire (11), et **en ce que** l'unité de senseur (1) évalue les données de mesure mémorisées et n'envoie des données de mesure à l'unité d'évaluation (9) sur la base du résultat de l'évaluation que pendant une durée prédéfinie en fonction de l'événement et/ ou de la pression, pour l'optimisation d'utilisation de la voie de transmission.

11. Procédé selon la revendication 10, **caractérisé en ce que** les données de mesure sont transmises par voie radioélectrique.

12. Procédé selon la revendication 10 ou 11, **caractérisé en ce que** l'unité de senseur (1) écrit les données de mesure mémorisées dans l'unité de mémoire (11) avec une estampille correspondante.

13. Procédé selon l'une des revendications 10 à 12 au moins, **caractérisé en ce que** l'unité de senseur (1) active l'unité de transmission en cas de dépassement d'une valeur de mesure seuil Pₗᵢₘᵢₜₑ et/ou de dépassement d'une valeur limite de variation dP/dt, et démarre une transmission de valeurs de mesure à l'unité d'évaluation (9) en fonction de la pression.

14. Procédé selon l'une des revendications 10 à 13 au moins, **caractérisé en ce que** l'unité de senseur (1) capte les données de mesure et les recueille dans l'unité de mémoire (11), et démarre la transmission de valeurs de mesure à l'unité d'évaluation (9) en fonction de l'événement à l'issue d'un processus de mesure et/ou si la capacité de mémoire de l'unité de mémoire (11) est saturée.

15. Procédé selon l'une des revendications 10 à 14 au moins, **caractérisé en ce que** la transmission de valeurs de mesure est effectuée par compression.

16. Procédé selon l'une des revendications 10 à 15 au moins, **caractérisé en ce que** l'unité de senseur (1) mémorise les valeurs de mesure dans l'unité de mémoire (11) et les envoie dans une fente temporelle, synchronisées par une instruction d'envoi, à l'unité d'évaluation (9) en fonction de l'événement.

17. Procédé selon l'une des revendications 10 à 16 au moins, **caractérisé en ce que** l'instruction d'envoi est envoyée par l'unité d'évaluation (9) et reçue par l'unité de transmission de l'unité de senseur (1).
